# EUROPÄISCHE PATENTSCHRIFT

(11) **EP 0 573 896 B1**
(45) Veröffentlichungstag und Bekanntmachung des Hinweises auf die Patenterteilung: **20.09.1995**
(21) Anmeldenummer: 93108912.2
(22) Anmeldetag: 03.06.1993
(51) Int. Cl.: B01D 46/02, B01D 46/42, B01D 29/92, B01D 29/96

(54) **Verfahren zur Entfernung von schlauch- oder rohrförmigen Filtermitteln sowie Vorrichtung zur Durchführung dieses Verfahrens**
Process for removing tube or pipe shaped filter media and device for carrying out this process
Procédé d'élimination de moyens filtrants en forme de tuyaux ou tubes et dispositif d'exécution de ce procédé

(30) Priorität: 06.06.1992 DE 9207706 U
(43) Veröffentlichungstag der Anmeldung: 15.12.1993
(73) Patentinhaber: Clayton, Mike, D-53844 Troisdorf (DE); Konuralp, Aykut, D-53844 Troisdorf (DE)
(72) Erfinder: Clayton, Mike, D-53844 Troisdorf (DE); Konuralp, Aykut, D-53844 Troisdorf (DE)
(74) Vertreter: Paul, Dieter-Alfred, Dipl.-Ing.

(56) Entgegenhaltungen:
- EP-A- 0 377 107
- DE-A- 3 807 827
- DE-A- 3 808 602
- GB-A- 786 443

## Beschreibung

Die Erfindung betrifft ein Verfahren zur Entfernung von schlauch- oder rohrförmigen Filtermitteln aus Halteböden von Filteranlagen, bei denen das jeweilige Filtermittel nach oben aus dem Halteboden herausgehoben wird. Sie betrifft ferner eine Vorrichtung zur Entfernung von schlauch- oder rohrförmigen Filtermitteln aus Halteböden von Filteranlagen.

Filteranlagen zur Reinigung verschmutzter Luft weisen häufig ein Gehäuse auf, das durch einen meist horizontal ausgerichteten Halteboden in einen darunterliegenden Staubgasraum und einen darüberliegenden Reingasraum aufgeteilt ist. In den Staubgasraum mündet die verunreinigte Luft, während der Reingasraum mit einem Abluftkanal verbunden ist (vgl. VDI Richtlinien 3677, Juli 1980̸, S. 15).

Der Halteboden weist eine Vielzahl von öffnungen auf, in die abdichtend schlauchförmige oder rohrförmige Filtermittel derart eingehängt sind, daß sie nach unten in den Staubgasraum hineinragen. Die Filtermittel können aus starrem Material, beispielsweise Keramikmaterial bestehen, aber auch aus textilem Material in Form von Filterschläuchen. Im Betrieb tritt das verunreinigte Gas durch die mantelförmigen Wandungen der schlauch- bzw. rohrförmigen Filtermittel von außen nach innen hindurch, wobei sich die aus Feststoffen bestehenden Verunreinigungen auf dem Außenmantel der Filtermittel ablagern.

Die Filtermittel müssen von Zeit zu Zeit gereinigt oder auch ausgewechselt werden. Dies geschieht in den meisten Fällen in der Weise, daß gegebenenfalls vorhandene Zusatzeinrichtungen, wie beispielsweise Filterkörbe und Venturidüsen, entfernt werden und dann das Filtermittel aus der Halterung im Halteboden gelöst wird. Dann wird das jeweilige Filtermittel nach oben aus dem Halteboden herausgehoben und zu einem Lagerort transportiert.

Bei dieser Arbeit ist unvermeidlich, daß sich Staub von den Oberflächen der Filtermittel löst und den Arbeitsraum verschmutzt. Der Staub stellt zudem ein erhebliches Gesundheitsrisiko für die mit dem Auswechseln der Filtermittel beauftragten Personen dar. Die Personen können wegen der Staubbelastung nur begrenzte Zeit in dem fraglichen Bereich arbeiten. Auch die Lagerung der verunreinigten Filtermittel ist problematisch, da sie eine Verschmutzung der Lagerräume und der Umgebungsluft zur Folge hat. Schließlich muß vor dem Einsetzen frischer Filtermittel eine Reinigung der Filteranlage durchgeführt werden.

Der Erfindung liegt die Aufgabe zugrunde, ein Verfahren zur Entfernung von schlauch- oder rohrförmigen Filtermitteln aus einer Filteranlage sowie eine dazu passende Vorrichtung bereitzustellen, mit dem bzw. mit der das Entfernen der Filtermittel ohne wesentliche Verunreinigungen durch Staubentwicklung durchgeführt werden kann.

Diese Aufgabe wird erfindungsgemäß dadurch gelöst, daß ein an einem Ende offener und am anderen Ende geschlossener Folienschlauch mit einem offenen Ende in den Bereich des oberen Ende des Filtermittels gebracht wird, daß dann das geschlossene Endes des Folienschlauches in den Innenraum des Folienschlauches bis zum Filtermittel eingeführt wird, daß das obere Ende des Filtermittels von oben über das geschlossene Ende des Folienschlauches gegriffen und nach oben durch den Folienschlauch gehoben wird und daß schließlich der Folienschlauch hinter dem unteren Ende des Filtermittels geschlossen wird. Dabei sollte das offene Ende des Folienschlauches wenigstens während des Hineinziehens des Filtermittels festgehalten werden. Alternativ dazu ist erfindungsgemäß vorgesehen, daß ein an einem Ende offener und am anderen Ende geschlossener Folienschlauch mit seinem geschlossenen Ende in den Bereich des oberen Endes des Filtermittels gebracht wird, daß dann das obere Ende des Filtermittels von oben durch den Innenraum des Folienschlauches hindurch über dessen geschlossenes Ende gegriffen und das Filtermittel nach oben durch den Innenraum des Folienschlauches gehoben wird und daß schließlich der Folienschlauch hinter dem unteren Ende des Filtermittels geschlossen wird.

Grundgedanke der Erfindung ist also die Verwendung eines an einem Ende offenen und am anderen Ende geschlossenen Folienschlauches, wobei der Folienschlauch in der Weise gehandhabt wird, daß über das geschlossene Ende das obere Ende des Filtermittels gegriffen und dann das Filtermittel zusammen mit dem geschlossenen Ende des Folienschlauches durch diesen hindurch und so weit nach außen gezogen wird, bis das Filtermittel in seiner gesamten Länge innerhalb des Folienschlauches liegt. Dann kann das noch offene Ende des Folienschlauches geschlossen werden, beispielsweise mit Hilfe eines elastischen Bandes, eines Klebebandes oder eines Strickes. Auch eine Verschweißung ist möglich. Dabei sollte darauf geachtet werden, daß zwischen Folienschlauch und Halteboden kein Staubaustritt möglich ist.

Mit der erfindungsgemäßen Vorrichtung werden eine Reihe von Vorteilen verwirklicht. Da bei der Entnahme des Filterschlauches praktisch kein Staub mehr entweichen kann, wird das Gesundheitsrisiko des Bedienungsperonals erheblich herabgesetzt. Da die Bedienungsperson im wesentlichen in staubfreier Umgebung arbeitet, fallen wesentlich geringere Verlustzeiten durch Pausen an der frischen Luft an. Auch benötigt der Arbeitsraum nach Abschluß der Arbeiten kaum noch der Säuberung. Der anschließende Transport und die Lagerung der Filterschläuche ist problemlos, da die Gefahr von Verunreinigungen der Umgebungsluft und der Lagerräume gering ist.

Besonders rationell kann das Verfahren dann angewendet werden, wenn ein Folienschlauch großer Länge verwendet wird, dessen Länge also ein Vielfaches der Länge der Filtermittel beträgt. In diesem Fall kann der Folienschlauch zum Entfernen einer entsprechenden Anzahl von Filtermitteln herangezogen werden. Dies geschieht dann in der Weise, daß der Folienschlauch nach dem Durchziehen des Filtermittels durch den Innenraum des Folienschlauches und nach dem Verschließen hinter dem unteren Ende des Filtermittels von dem anschließenden Teil des Folienschlauches abgetrennt - selbstverständlich hinter dem Verschluß - und dieser anschließende Teil im Bereich der Trennung ebenfalls verschlossen wird. Dabei kann das Abtrennen des anschließenden Teils des Folienschlauchs auch nach dessen Verschließen durchgeführt werden.

Die obengenannte Aufgabe wird - soweit es die Vorrichtung angeht - erfindungsgemäß dadurch gelöst, daß eine über das obere Ende des Filtermittels stülpbare, oben- und untenseitig offene Halterung vorgesehen ist, auf der ein Folienschlauch aufgezogen ist, dessen eines Ende offen und dessen anderes Ende geschlossen ist, wobei das geschlossene Ende in den von der Halterung umschlossenen Innenraum einführbar ist.

Nach der Erfindung ist also eine nach zwei Seiten hin offene Halterung vorgesehen, auf der ein Folienschlauch, beispielsweise aus wiederaufbereitbarem Polyäthylen, aufgezogen ist, wobei dieser Folienschlauch an einem Ende offen und am anderen Ende geschlossen ist. Eine solche Kombination aus Folienschlauch und Halterung kann von oben über das obere Ende des Filtermittels gestülpt werden, und zwar vorzugsweise in der Art, daß die Vorrichtung zum Halteboden hin abdichtend wirkt. über das geschlossene Ende des Folienschlauches kann dann das Filtermittel gegriffen und nach oben gezogen werden, wobei der Filterschlauch von der Halterung entsprechend abgezogen wird. Wenn das Filtermittel vollständig innerhalb des Folienschlauches liegt, wird er hinter dem unteren Ende des Filtermittels geschlossen. Sofern noch anschließender Folienschlauch vorhanden ist, wird dieser abgetrennt und im Bereich der Trennung verschlossen.

Die Halterung kann vielgestaltig ausgebildet sein. Es bietet sich an, einen rohrförmigen, vorzugsweise zylindrischen Führungsmantel vorzusehen, der als geschlossener Mantel ausgebildet sein kann, aber auch Gitterform haben kann. Zum Schutz des Folienschlauches ist es zweckmäßig, daß der Führungsmantel von einem Außenmantel umgeben ist, wobei der Folienschlauch in dem Zwischenraum zwischen Führungs- und Außenmantel angeordnet ist. Dabei sollte der Zwischenraum an einem Ende geschlossen sein, um Staubaustritt zu vermeiden.

Sofern der Zwischenraum obenseitig offen und untenseitig geschlossen ist, kann die Schlauchfolie zunächst nach oben in der gewünschten Länge herausgezogen werden. Dann wird das geschlossene Ende sich in den vom Führungsmantel gebildeten Innenraum bis hin zum Filtermittel eingeführt. Anschließend wird das Filtermittel gegriffen und durch den Führungsmantel hindurch herausgehoben.

Alternativ dazu besteht die Möglichkeit, den Zwischenraum obenseitig geschlossen und untenseitig offen auszubilden. In diesem Fall wird der Folienschlauch nach unten herausgezogen und das Filtermittel durch den vom Führungsmantel gebildeten Innenraum hindurch gegriffen. Dann kann das Filtermittel zusammen mit dem geschlossenen Ende des Folienschlauches herausgehoben werden, wobei der Folienschlauch unter Umlenkung an der unteren Kante des Führungsmantels abgezogen wird.

Die Halterung weist zweckmäßigerweise untenseitig einen Aufsetzrahmen auf, um ihr nach dem überstülpen auf das obere Ende des Filtermittels Stabilität zu geben. Dabei ist es besonders zweckmäßig, daß der Aufsetzrahmen nach unten vorstehende Standfüße aufweist, die auch höhenregulierbar ausgebildet sein können und daß eine nach unten vorspringende Abdichtschürze für den Einschluß des oberen Endes des Filtermittels vorgesehen ist. Letzterer kann aus flexiblem Material, beispielsweise Gummi, bestehen. Im übrigen sollte der Aufsetzrahmen so ausgebildet sein, daß die Bedienungsperson auf ihm stehen kann.

Von besonderem Vorteil ist eine Ausbildung, bei der die Halterung von dem Aufsetzrahmen abnehmbar ist. Dies eröffnet die Möglichkeit, für den Aufsetzrahmen eine stabile, begehbare Konstruktion vorzusehen, für die Halterung des Folienschlauches jedoch billiges, wegwerfbares Material, beispielsweise Pappe oder dergleichen, zu verwenden.

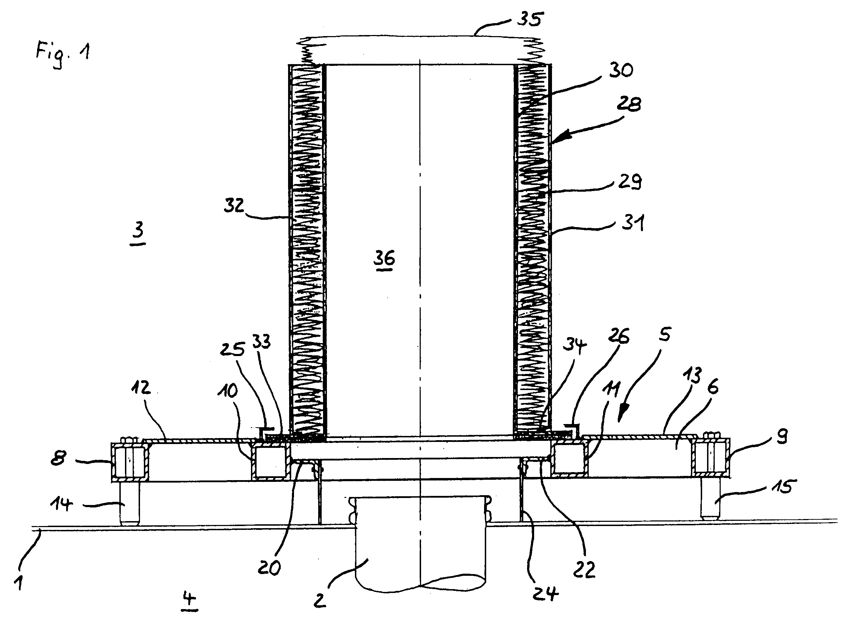

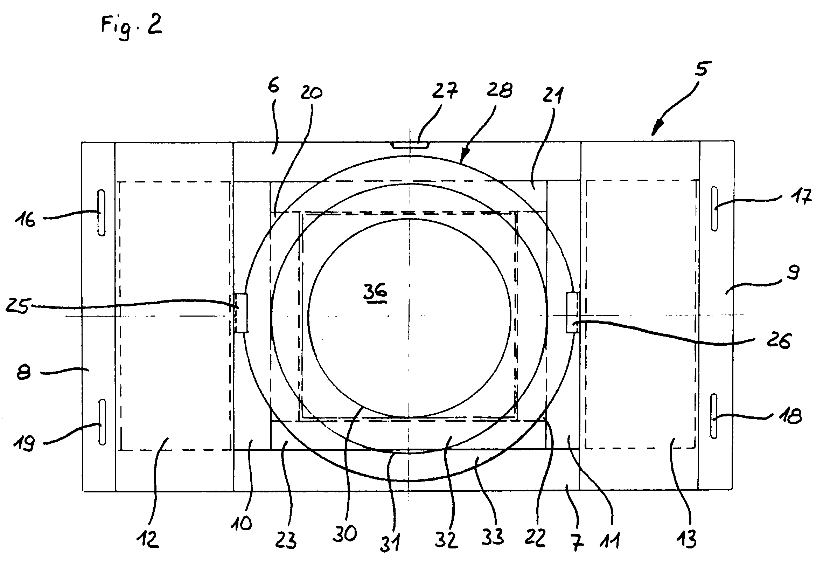

In der Zeichnung ist die Erfindung an Hand eines Ausführungsbeipiels näher veranschaulicht. Es zeigen:
- Figur (1): einen Vertikalschnitt durch eine erfindungsgemäße Vorrichtung und
- Figur (2): eine Draufsicht auf die Vorrichtung gemäß Figur (1).

In Figur (1) ist ein Teilstück eines Haltebodens (1), in dem eine Vielzahl von Filterschläuchen eingehängt sind, von denen hier beispielhaft nur der Filterschlauch (2) zu sehen ist. Der Halteboden (1) ist Teil eines Filtergehäuses und trennt den oberen Reingasraum (3) vom unteren Staubgasraum (4). Das Filtergehäuse ist der übersichtlichkeit halber weggelassen. Der Filterschlauch (2) ist hier schon so weit aus dem Halteboden (1) angehoben, daß er leicht nach oben herausgehoben werden kann.

Oberhalb des Filterschlauches (2) steht eine Vorrichtung, mit der sich der Filterschlauch (2) im wesentlichen ohne die Gefahr von Verschmutzungen und Luftverunreinigungen entnehmen läßt. Diese Vorrichtung weist einen Aufsetzrahmen (5) auf, welcher von als Hohlprofile ausgebildeten Längsträgern (6, 7) und diese endseitig verbindenden, ebenfalls als Hohlprofile ausgebildete Querträgern (8, 9) begrenzt wird. Im Abstand zu den Querträgern (8, 9) und parallel zu diesen verlaufen Querstreben (10̸, 11), die die Längsträger (6, 7) verbinden. Der Zwischenraum zwischen jeweils einem Querträger (8, 9) und einer Querstrebe (10̸, 11) wird jeweils durch eine rutschfeste Bodenplatte (12, 13) abgedeckt. Auf diesen Bodenplatten (12, 13) kann eine Bedienungsperson stehen.

In jeder Ecke des Aufsetzrahmens (5) sind Stehbolzen (14, 15) angebracht, auf denen der Aufsetzrahmen (5) im Abstand zum Halteboden (1) ruht. Die Stehbolzen (14, 15) sind höhenverstellbar ausgebildet. In Figur (2) sind sie weggelassen, um die Schlitze (16, 17, 18, 19) in den Querträgern (8, 9) zu zeigen. In diesen Schlitzen (16, 17, 18, 19) können die Stehbolzen (14, 15) verschoben werden, um den jeweiligen Gegebenheiten Rechnung zu tragen.

An den Innenseiten der Längsträger (6, 7) und den Innenseiten der Querstreben (10̸, 11) ist jeweils ein Winkelprofil (20̸, 21, 22, 23) angeschweißt. Diese ergänzen sich zu einem umlaufenden, lückenlosen Quadrat. An den Innenseiten der Winkelprofile (20̸, 21, 22, 23) ist eine Gummischürze (24) angenietet, welche nach unten bis zum Halteboden (1) reicht und rundum geschlossen ist. Sie umgibt das obere Ende des Filterschlauches (2) und damit auch die Öffnung, in dem der Filterschlauch (2) sitzt.

Mittig auf den Querstreben (10̸, 11) sind kleine Führungswinkel (25, 26) angebracht, deren obere, waagerechte Schenkel aufeinanderzu gerichtet sind. Der in Figur (2) obenliegende Längsträger (6) weist - ebenfalls mittig - einen Anschlag (27) auf.

Auf dem Aufsetzrahmen (5) sitzt eine Halterung (28) für einen Folienschlauch (29). Der Folienschlauch (29) ist in Figur (2) ebenso wie der Filterschlauch (2) der übersichtlichkeit halber weggelassen.

Die Halterung (28) weist einen aus Pappe bestehenden Führungsmantel (30̸) auf, der konzentrisch und im Abstand zu diesem von einem Außenmantel (31) - ebenfalls aus Pappe - umgeben ist. Beide haben die gleiche Höhe und schließen einen ringförmigen Zwischenraum (32) ein, der obenseitig offen ist. Der Führungsmantel (30̸) ist am unteren Ende nach außen zu einem Kragen (33) umgebogen. Der Kragen (33) steht über dem Außenmantel (31) vor und faßt in der gezeigten Stellung unter die beiden Führungswinkel (25, 26). Am untenseitigen Ende des Außenmantels (31) ist ein nach innen ragender Ringsteg (34) umgebogen. Er ist mit dem Kragen (33) verklebt, so daß der Zwischenraum (32) nach unten hin geschlossen ist.

In dem Zwischenraum (32) ist der Folienschlauch (29) eingesetzt, und zwar leporelloartig gefaltet und gestaucht. Auf diese Weise lassen sich auf 40̸0̸ mm Höhe ca. 10̸0̸ m Folienschlauch (29) in dem Zwischenraum (32) unterbringen. Der Folienschlauch (29) kann beispielsweise eine Dicke von 0̸,0̸5 mm haben. Obenseitig hat der Folienschlauch (29) ein geschlossenes Ende (35).

Die Entfernung des Filterschlauches (2) geschieht mit Hilfe der vorstehend beschriebenen Vorrichtung wie folgt.

Zunächst werden gegebenenfalls vorhandene Zusatzeinrichtungen, wie beispielsweise Filterkorb oder Venturidüse, entfernt. Dann wird der verschmutzte Filterschlauch (2) aus seiner Halterung gelöst, so daß er leicht angehoben werden kann. Diese Stellung des Filterschlauches (2) ist in Figur (1) schon erreicht. Sofern - wie allgemeinen üblich - mehrere Filterschläuche (2) entfernt werden sollen, ist es zweckmäßig, zunächst alle Filterschläuche (2) in der vorbeschriebenen Weise vorzubereiten.

Es wird dann der Aufsetzrahmen (5) über den jeweils zu entfernenden Filterschlauch (2) so geschoben, daß dessen Gummischürze (24) das obere Ende des Folienschlauches (2) - wie in Figur (1) gezeigt - abdichtend umgibt. Vorher oder nachher wird dann die Halterung (28) auf den Aufsetzkranz (5) aufgeschoben, und zwar derart, daß der Kragen (33) des Führungsmantels (30̸) unter die beiden Führungswinkel (25, 30̸) faßt und gegen den Anschlag (27) fährt. Dann kann die Bedienungsperson den Aufsetzkranz (5) durch Aufsetzen der Füße auf die beiden Bodenplatten (12, 13) betreten, so daß sie einen sicheren Stand hat und der Aufsetzkranz (5) sich nicht verschiebt.

Nunmehr kann die Bedienungsperson das geschlossene Ende (35) des Folienschlauches (29) nach oben ziehen, so daß eine ausreichende Länge Folienschlauch (29) von dem Führungsmantel (30̸) nach oben abgezogen wird. Die Länge sollte so bemessen sein, daß anschließend das geschlossene Ende (35) in den vom Führungsmantel (30̸) eingeschlossenen Innenraum (36) bis zum oberen Ende des Filterschlauches (2) abgesenkt werden kann, ohne daß bei diesem Vorgang weitere Teile des Filterschlauches (29) aus dem Zwischenraum (32) herausfahren müssen. Die Bedienungsperson kann dann über das geschlossene Ende (35) des Folienschlauches (29) das obere Ende des Filterschlauches (2) greifen und beide durch den Innenraum (36) nach oben ziehen. Da der Filterschlauch (2) länger ist als die Höhe der gesamten Vorrichtung, wird hierbei auch weiterer Folienschlauch (29) aus dem Zwischenraum (32) abgezogen. Dies geschieht solange, bis das untere Ende des Filterschlauches (2) außerhalb des Innenraums (36) herausgehoben worden ist.

Der Folienschlauch (29) wird dann unterhalb des unteren Endes des Filterschlauches (2) verschlossen, beispielsweise mit Hilfe von Bändern oder aber auch durch Verschweißen. Unterhalb dieses Verschlusses wird der den Filterschlauch (2) umhüllende Teil des Folienschlauches (29) abgetrennt. Der Filterschlauch (2) kann dann mit dem ihn umhüllenden Teil des Folienschlauches (29) wegtransportiert werden, ohne daß hiermit Staubemissionen verbunden sind.

Der verbleibende Teil des Folienschlauches (29) wird etwas unterhalb der Trennstelle verschlossen, so daß wieder ein geschlossenes Ende des Folienschlauches (29) entsteht. Die gesamte Vorrichtung kann dann zu einem benachbarten Filterschlauch verschoben und dort der Vorgang der Entnahme des Filterschlauches aus dem Halteboden (1) wiederholt werden. Dies kann solange fortgesetzt werden, bis der Folienschlauch (29) aufgebraucht ist. Dann wird die Halterung (28) entfernt und durch eine neue Halterung, versehen mit Folienschlauch, ersetzt. Die Halterung (28) kann aus wiederaufbereitbarem Material gefertigt sein und vor Ort entsorgt werden.

Es liegt im Rahmen der Erfindung, daß die Halterung (28) auch untenseitig offen ausgebildet sein kann, so daß der Folienschlauch (29) nach unten hin aus dem Zwischenraum (32) herausgezogen wird. Die Bedienungsperson kann dann von oben durch den Innenraum (36) das unten geschlossen ausgebildete Ende des Folienschlauchs (29) und damit auch den Filterschlauch (2) greifen und diesen anschließend zusammen mit dem geschlossenen Ende nach oben herausziehen. Dabei wird der Folienschlauch (29) nach unten aus dem Zwischenraum (32) über die untere Kante des Führungsmantels (30̸) abgezogen und dann nach oben mitgezogen. Alles Weitere geschieht in analoger Weise wie bei der in der Zeichnung dargestellten Ausführungsform.

## Patentansprüche

1. Verfahren zur Entfernung von schlauch- oder rohrförmigen Filtermitteln aus Halteböden von Filteranlagen, bei dem das jeweilige Filtermittel nach oben aus dem Halteboden herausgehoben wird,
dadurch gekennzeichnet, daß ein an einem Ende offener und am anderen Ende (35) geschlossener Folienschlauch (29) mit seinem offenen Ende in den Bereich des oberen Endes des Filtermittels (2) gebracht wird, daß dann das geschlossene Ende (35) des Folienschlauches (29) in den Innenraum (36) des Folienschlauches (29) bis zum Filtermittel (2) eingeführt wird, daß das obere Ende des Filtermittels (2) über das geschlossene Ende (35) des Folienschlauches (29) gegriffen und nach oben durch den Folienschlauch (29) gehoben wird und daß schließlich der Folienschlauch (29) hinter dem unteren Ende des Filtermittels (2) geschlossen wird.

2. Verfahren nach Anspruch 1,
dadurch gekennzeichnet, daß das offene Ende des Folienschlauches (29) wenigstens während des Hineinziehens des Filtermittels (2) festgehalten wird.

3. Verfahren zur Entfernung von schlauch- oder rohrförmigen Filtermitteln aus Halteböden von Filteranlagen, bei dem das jeweilige Filtermittel nach oben aus dem Halteboden herausgehoben wird,
dadurch gekennzeichnet, daß ein an einem Ende offener und am anderen Ende (35) geschlossener Folienschlauch (29) mit seinem geschlossenen Ende (35) in den Bereich des oberen Endes des Filtermittels (2) gebracht wird, daß dann das obere Ende des Filtermittels (2) durch den Innenraum (36) des Folienschlauches (29) hindurch über dessen geschlossenen Ende (35) gegriffen und das Filtermittel (2) nach oben durch den Innenraum des Folienschlauches (29) gehoben wird und daß schließlich der Folienschlauch (29) hinter dem unteren Ende des Filtermittels (2) geschlossen wird.

4. Verfahren nach einem der Ansprüche 1 bis 3,
dadurch gekennzeichnet, daß ein Folienschlauch (29) großer Länge verwendet wird und daß der Folienschlauch (29) nach dem Hineinziehen des Filtermittels (2) und nach dem Verschließen hinter dem unteren Ende des Filtermittels (2) von dem anschließenden Teil des Folienschlauches (29) abgetrennt und dieser anschließende Teil im Bereich der Trennung verschlossen wird.

5. Verfahren nach Anspruch 4,
dadurch gekennzeichnet, daß das Abtrennen des anschließenden Teils des Folienschlauches (29) nach dessen Verschließen durchgeführt wird.

6. Vorrichtung zur Entfernung von schlauch- oder rohrförmigen Filtermitteln aus Halteböden von Filteranlagen,
dadurch gekennzeichnet, daß eine über das obere Ende des Filtermittels (2) stülpbare, oben- und untenseitig offene Halterung (28) vorgesehen ist, auf der ein Folienschlauch (29) aufgezogen ist, dessen eines Ende offen und dessen anderes Ende (35) geschlossen ist, wobei das geschlossene Ende (35) in den von der Halterung (28) umschlossenen Innenraum (36) einführbar ist.

7. Vorrichtung nach Anspruch 6,
dadurch gekennzeichnet, daß die Halterung (28) einen rohrförmigen Führungsmantel (30̸) aufweist, auf den der Folienschlauch (29) aufgezogen ist.

8. Vorrichtung nach Anspruch 7,
dadurch gekennzeichnet, daß der Führungmantel (30̸) von einem Außenmantel (31) umgeben ist, wobei der Folienschlauch (29) in dem Zwischenraum (32) zwischen Führungs- und Außenmantel (30, 31) angeordnet ist.

9. Vorrichtung nach Anspruch 8,
dadurch gekennzeichnet, daß der Zwischenraum (32) obenseitig offen und untenseitig geschlossen ist.

10. Vorrichtung nach Anspruch 8,
dadurch gekennzeichnet, daß der Zwischenraum (32) obenseitig geschlossen und untenseitig offen ausgebildet ist.

11. Vorrichtung nach einem der Ansprüche 5 bis 10̸,
dadurch gekennzeichnet, daß die Halterung (28) untenseitig einen Aufsetzrahmen (5) aufweist.

12. Vorrichtung nach Anspruch 11,
dadurch gekennzeichnet, daß der Aufsetzrahmen (5) nach unten vorstehende Standfüße (14, 15) aufweist und daß eine nach unten vorspringende Abdichtschürze (24) für den Einschluß des oberen Endes des Filtermittels (2) vorgesehen ist.

13. Vorrichtung nach Anspruch 11 oder 12,
dadurch gekennzeichnet, daß die Halterung (28) von dem Aufsetzrahmen (5) abnehmbar ist.

## Claims

1. Process for the removal of bag- or tube-shaped filter media from the support floors of filtering systems where the respective filter medium is lifted out from the support floor towards the top,
characterized in that a foil bag (29) that is open at one end and closed at the other end (35) is brought with its open end into the area of the top end of the filter medium (2); that then the closed end (35) of the foil bag (29) is inserted into the interior (36) of the foil bag (29) until it reaches the filter medium (2); that the top end of the filter medium (2) is grasped via the closed end (35) of the foil bag (29) and is lifted upward through the foil bag (29); and that finally the foil bag (29) is closed behind the bottom end of the filter medium (2).

2. Process according to Claim 1,
characterized in that the open end of the foil bag (29) is held firmly at least during the drawing in of the filter medium.

3. Process for the removal of bag- or tube-shaped filter media from the support floors of filtering systems where the respective filter medium is lifted out from the support floor towards the top,
characterized in that a foil bag (29) that is open at one end and closed at the other end (35) is brought with its closed end (35) into the area of the top end of the filter medium (2); that then the top end of the filter medium (2) is grasped through the interior (36) of the foil bag (29) via the closed end (35) of the latter and the filter medium (2) is lifted upward through the interior of the foil bag (29); and that finally the foil bag (29) is closed behind the bottom end of the filter medium (2).

4. Process according to one of Claims 1 to 3,
characterized in that a foil bag (29) of a great length is used, and that the foil bag (29), after the pulling in of the filter medium (2) and after the closing behind the bottom end of the filter medium (2) is cut off from the adjoining part of the foil bag (29), and that this adjoining part is closed in the area of the cut.

5. Process according to Claim 4,
characterized in that the cutting of the adjoining part of the foil bag (29) is performed after it has been closed.

6. Device for the removal of bag- or tube-shaped filter media from the support floors of filtering systems,
characterized in that it comprises a holder (28) that is open to the top and bottom and can be turned over the top end of the filter medium (2), and over which is pulled a foil bag (29) whose one end is open and whose other end (35) is closed, whereby the closed end (35) can be inserted into the interior (36) that is surrounded by the holder (28).

7. Device according to Claim 6,
characterized in that the holder (28) has a tubular guide mantle (30) over which the foil bag (29) is pulled.

8. Device according to Claim 7,
characterized in that the guide mantle (30) is surrounded by an external mantle (31), whereby the foil bag (29) is disposed in the space (32) between guide mantle and external mantle (30, 31).

9. Device according to Claim 8,
characterized in that the space (32) is open towards the top and closed towards the bottom.

10. Device according to Claim 9,
characterized in that the space (32) is closed towards the top and open towards the bottom.

11. Device according to one of Claims 5 to 10,
characterized in that the holder (28) has a support frame (5) at the bottom.

12. Device according to Claim 11,
characterized in that the support frame (5) has feet (14, 15) that project downward, and that a sealing apron (24) projecting downward (24) has been provided for containing the top end of the filter medium (2).

13. Device according to Claim 11 or 12,
characterized in that the holder (28) can be removed from the support frame (5).

## Revendications

1. Procédé d'élimination de moyens filtrants en forme de tuyaux ou tubes, sur des fonds de retenue d'installations de filtration, dans lequel le moyen filtrant respectif est soulevé vers le haut depuis le fond de retenue,
caractérisé en ce qu'un tuyau en feuille (29), ouvert à une extrémité et fermé à l'autre extrémité (35), est placé avec son extrémité ouverte dans la zone de l'extrémité supérieure du moyen filtrant (2), en ce que, ensuite, l'extrémité fermée (35) du tuyau en feuille (29) est introduite dans l'espace intérieur (36) du tuyau en feuille (29) jusqu'au moyen filtrant (2), en ce que l'extrémité supérieure du moyen filtrant (2) est saisie par l'extrémité fermée (35) du tuyau en feuille (29) et soulevée vers le haut, à travers le tuyau en feuille (29) et en ce que, enfin, le tuyau en feuille (29) est fermé derrière l'extrémité inférieure du moyen filtrant (2).

2. Procédé selon la revendication 1,
caractérisé en ce que l'extrémité ouverte du tuyau en feuille (29) est fixée au moins pendant l'introduction du moyen filtrant (2).

3. Procédé d'élimination de moyens filtrants en forme de tuyaux ou tubes, depuis des fonds de retenue d'installations de filtration, dans lequel le moyen filtrant respectif est soulevé en direction du haut, depuis le fond de retenue,
caractérisé en qu'un tuyau en feuille (29), ouvert à une extrémité et fermé à l'autre extrémité (35), est placé avec son extrémité fermée (35) dans la zone de l'extrémité supérieure du moyen filtrant (2), en ce que, ensuite, l'extrémité supérieure du moyen filtrant (2) est passée à travers l'espace intérieur (36) du tuyau en feuille (29), saisie sur son extrémité fermée (35), et le moyen filtrant (2) étant soulevé vers le haut, à travers l'espace intérieur du tuyau en feuille (29) et en ce que, enfin, le tuyau en feuille (29) est fermé derrière l'extrémité inférieure du moyen filtrant (2).

4. Procédé selon l'une des revendications 1 à 3,
caractérisé en ce qu'un tuyau en feuille (29) de grande longueur est utilisé et en ce que le tuyau en feuille (29) est séparé de la partie connexe du tuyau en feuille (29), après introduction du moyen filtrant (2) et après fermeture derrière l'extrémité inférieure du moyen filtrant (2), et cette partie connexe étant obturée dans la zone de la séparation.

5. Procédé selon la revendication 4,
caractérisé en ce que la séparation de la partie connexe du tuyau en feuille (29) est effectuée après sa fermeture.

6. Dispositif d'élimination de moyens filtrants en forme de tuyaux ou de tubes à partir de fonds de retenue d'installations de filtration,
caractérisé en ce qu'est prévue une fixation (28) pouvant être enfilée sur l'extrémité supérieure du moyen filtrant (2) et ouverte en faces supérieure et inférieure, fixation (28) sur laquelle est enfilé un tuyau en feuille (29) dont une extrémité est ouverte et l'autre extrémité (35) est fermée, l'extrémité fermée (35) pouvant être introduite dans l'espace intérieur (36) enclos par la fixation (28).

7. Dispositif selon la revendication 6,
caractérisé en ce que la fixation (28) présente une enveloppe de guidage (30) tubulaire, sur laquelle le tuyau en feuille (29) est enfilé.

8. Dispositif selon la revendication 7,
caractérisé en ce que l'enveloppe de guidage (30) est entourée par une enveloppe extérieure (31), le tuyau en feuille (29) étant disposé dans l'espace intermédiaire (32), entre enveloppe de guidage et enveloppe extérieure (30, 31).

9. Dispositif selon la revendication 8,
caractérisé en ce que l'espace intermédiaire (32) est ouvert en face supérieure et fermé en face inférieure.

10. Dispositif selon la revendication 8,
caractérisé en ce que l'espace intermédiaire (32) est fermé en face supérieure et ouvert en face inférieure.

11. Dispositif selon l'une des revendications 5 à 10,
caractérisé en ce que la fixation (28) présente en face inférieure un cadre de pose (5).

12. Dispositif selon la revendication 11,
caractérisé en ce que le cadre de pose (5) présente des pieds-support (14, 15) faisant saillie vers le bas et en ce qu'un tablier d'étanchéité (24), faisant saillie vers le bas, est prévu pour introduire l'extrémité supérieure du moyen filtrant (2).

13. Dispositif selon la revendication 11 ou 12,
caractérisé en ce que la fixation (28) peut être enlevée du cadre de pose (5).
